# EUROPEAN PATENT SPECIFICATION

(11) **EP 2 193 036 B1**
(45) Date of publication and mention of the grant of the patent: **14.09.2011**
(21) Application number: 07820688.5
(22) Date of filing: 28.09.2007
(51) Int. Cl.: B60C 1/00, C08K 3/04, C08K 7/14, C08K 13/04, C08L 7/00, C08L 9/00, C08L 21/00

(54) **TIRE AND CROSSLINKABLE ELASTOMERIC COMPOSITION COMPRISING GLASS FLAKES**
REIFEN UND VERNETZBARE ELASTOMERE ZUSAMMENSETZUNG MIT GLASFLAKES
PNEU COMPRENANT UNE COMPOSITION ÉLASTOMÈRE RÉTICULABLE CONTENANT DES PARTICULES DE VERRE

(43) Date of publication of application: 09.06.2010
(73) Proprietor: Pirelli Tyre S.p.A., 20126 Milano (IT)
(72) Inventor: SOLINAS, Stefano, I-20126 Milano (IT); RATTI, Giuseppina, I-20126 Milano (IT)
(74) Representative: Allaix, Roberto
(86) International application number: PCT/EP2007/060301
(87) International publication number: WO 2009/039889

(56) References cited:
- EP-A- 1 172 406
- EP-A- 1 195 402
- JP-A- 61 241 361
- US-B2- 6 770 700

## Description

### Field of the invention

The present invention generally relates to a tire and to a crosslinkable elastomeric composition comprising glass flakes.

More in particular, the present invention relates to a tire including at least one structural element obtained by crosslinking a crosslinkable elastomeric composition comprising glass flakes having specific thickness and specific aspect ratio.

Moreover, the present invention also relates to a crosslinkable elastomeric composition comprising glass flakes having specific thickness and specific aspect ratio, as well as to a crosslinked manufactured article obtained by crosslinking said crosslinkable elastomeric composition.

### Background of the invention

In the rubber industry, in particular that of tires manufacturing, it is known practice to use additives with the crosslinkable elastomeric compositions to improve the mechanical properties of the finished product (i.e. the crosslinked manufactured article.

For example, hardness of the elastomeric compositions may be increased by increasing crosslinking density of these compositions by using a large amount of sulfur; or by using a large amount of carbon black, or a very fine and structured carbon black. However, the above ways of increasing hardness may lead to a number of drawbacks.

For example, it is known that the use of a large amount of sulfur may cause remarkable reversion phenomena, which result in modification of the tire performance during use. On the other side, it is known that carbon black gives the crosslinked manufactured product pronounced hysteresis properties, that is to say an increase in the dissipated heat under dynamic conditions, which results in an increase in the rolling resistance of the tire and the fuel consumption. In addition, a large amount of carbon black causes an increase in the viscosity of the elastomeric composition and, consequently, has a negative impact on the processability and extrudability of the crosslinkable elastomeric composition.

To overcome the drawbacks caused by the use of carbon black, the so-called "white" reinforcing fillers are usually used, in particular silica, in total or partial replacement for the carbon black. However, although the use of said reinforcing fillers leads to good tear resistance, it also entails a series of drawbacks essentially related to the poor affinity of these fillers with respect to the elastomeric polymers commonly used in the production of tires. In particular, to obtain a good degree of dispersion of the silica in the elastomeric polymers, it is necessary to subject the elastomeric compositions to a prolonged thermo mechanical blending action. To increase the affinity of the silica with the elastomeric polymers, it is necessary to use suitable coupling agents, such as, for example, sulfur-containing organosilane products. However, the need to use such coupling agents places a limitation on the maximum temperature which may be reached during the blending and thermo mechanical processing operations of the composition, to avoid the penalty of an irreversible thermal degradation of the coupling agent.

Moreover, the processability of such crosslinkable elastomeric compositions comprising reinforcing fillers such as carbon black and/or silica would require higher temperatures, but this implies a reduction of the productivity, an excessive power consumption, and an increased risk of forming defects due to a partial early curing ("scorching phenomena").

Usually, the above mentioned problems have been attempted to be solved by the addition of salts of fatty acids with sodium or zinc (soaps), or by the addition of lubricants or oils, that may reduce the viscosity and increase the flowability. However, the use of such ingredients involves the problem of a reduction of the tensile modulus and the hardness of the resulting crosslinked elastomeric composition.

Recent approaches for improving the processability of crosslinkable elastomeric compositions comprising silica have been directed to reducing or replacing the use of silica coupling agents by employing silica dispersing aids, such as monofunctional silica shielding agents (e.g., silica hydrophobating agents that chemically react with the surface silanol groups on the silica particles but are not reactive with the elastomeric polymer) and agents which physically shield the silanol groups, to prevent reagglomeration (flocculation) of the silica particles after compounding. Silica processing aids useful for such purposes are described, for example, in United States Patent US 6,512,035 disclosing the use of one or more monofunctional alkyl tin compounds, in United States Patent US 6,608,145 disclosing the use of silica dispersing aids, such as alkyl alkoxysilanes, glycols (e.g., diethylene glycol, or polyethylene glycol), fatty acid esters of hydrogenated and non-hydrogenated C₅ and C₆ sugars (e.g., sorbitan oleates), polyoxyethylene derivatives of the fatty acid esters, and fillers such as mica, talc, urea, clay, sodium sulfate, or in United States Patent US 7,041,745 disclosing the use of polar additive, such as the poly(vinyl acetate) (PVA). The use of glass particles, in whichever shape, has never been mentioned or suggested to solve the above mentioned problems.

United States Patent US 7,122,090 discloses a tire excellent in performance on ice and snow having a tread comprising a rubber sheet obtained from a rubber composition containing 2 to 50 parts by weight of short fiber or plate-like material based on 100 parts by weight of diene rubber, wherein said short fiber material has an average fiber diameter of 1 to 100 µm and average length of 0.1 to 5 mm and said plate-like material has an average thickness of 1 to 90 µm and average length of 0.1 to 5 mm. The short fiber is preferably organic and/or inorganic short fiber. An example of the organic short fiber is polyester fiber. Examples of the inorganic short fiber are glass fiber, carbon fiber, metal fiber (tungsten, iron, copper, plartinum, stainless steel) and potassium titanate fiber. Examples of the plate-like material are aluminum whisker, potassium titanate whisker, aluminum borate whisker, titanate oxide type whisker and zinc oxide wisker.

EP1172406 relates to a rubber composition for tire tread comprising glass fibers to improve the overall performance of the tire on snow and ice. The rubber composition comprises glass fibers with certain dimensions in terms of diameter, length and aspect ratio, in particular having a diameter of 10 micrometer, a length of 0.4 mm and an aspect ratio (defined by the ratio of length / diameter) of 40.

EP1195402 relates to a composition for the inner liner of a tire consisting of flat mineral particles with an aspect ratio of 3 or more to improve air-tight, allowing a thinner layer, and then have a lighter tire, and improve workability. The mineral particles may be composed of kaolin, mica, clay, feldspar, aluminum and hydrated silica-alumina composite. The aspect ratio means a ratio of a/b, wherein a is an average major diameter and b is an average minor diameter of 50 mineral particles.

JP 61 241361 relates to a curable composition based on organo-silicon compounds to give crosslinked composition used for making moldings with high resistance and low polymerization shrinkage. The curable composition is said to contain filling fiber, such as milled fiber, glass flake, or mineral fiber having an aspect ratio of 20 to 500. The aspect ratio is defined as the ratio of fiber length / fiber diameter.

United States Patent US 6,770,700 discloses a crosslinkable compositions based on organosilicon compounds and moldings produced therefrom further containing glass flakes having a thickness of from 0.1 to 20 µm, a length of from 1 to 5000 µm and a width of from 1 to 5000 µm, and a width or length to thickness ratio in the range from 10:1 to 2000:1.

### Summary of the invention

The Applicant has faced the problem of improving the processability of the crosslinkable elastomeric compositions comprising reinforcing filler(s) without negatively affecting or even improving the mechanical properties of the obtained crosslinked manufactured products, in particular of the obtained tires.

The Applicant has found that the above mentioned problem may be overcome by adding to the crosslinkable elastomeric compositions which may be advantageously used in the production of crosslinked manufactured products, in particular in the manufacturing of tires, by adding to the crosslinkable elastomeric compositions glass flakes having both specific average thickness and specific aspect ratio.

In particular, the crosslinkable elastomeric compositions comprising such glass flakes show low viscosity and good flowability and, consequently, good processability and extrudability. Moreover, the obtained crosslinked manufactured articles maintained unaltered or even improved mechanical characteristics.

Furthermore, the Applicant has also found that the obtained crosslinked elastomeric compositions, in particular in the case of the elastomeric compositions which may be advantageously used in the manufacturing of a tire tread band, show a reduced variation of the dynamic elastic modulus (E') as the temperature increases (namely, a reduced "thermoplastic behaviour" of the crosslinked elastomeric compositions which, consequently, are able to maintain essentially constant elastic performance qualities over a wide temperature range which is of fundamental importance when using said crosslinkable elastomeric compositions in tire manufacturing).

Additionally, the Applicant has also found that the obtained crosslinked elastomeric compositions show an improved isotropic reinforcement in both the direction of calendering and in the direction orthogonal thereto. A pneumatic tire comprising a structural element, such as, for example, bead fitter, tread band, tread underlayer, antiabrasive layers, sidewalls, or sidewall inserts, manufactured with the crosslinked elastomeric compositions of the present invention consequently show an improved resistance to the lateral forces applied on the tire during running, in particular, during bending.

Accordingly, in a first aspect, the present invention relates to a tire comprising at least one structural element including a crosslinked elastomeric material obtained by crosslinking a crosslinkable elastomeric composition comprising:
(a) 100 phr of at least one elastomeric polymer;
(b) from about 0.1 phr to about 120 phr, preferably from about 20 phr to about 90 phr of at least one reinforcing filler;
(c) from about 1 phr to about 80 phr, preferably from about 2 phr to about 60 phr of glass flakes having an average thickness equal to or lower than 5.0 µm and an average aspect ratio higher than 1.

According to one preferred embodiment, said tire comprises:
- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a pair of sidewalls applied laterally on opposite sides with respect to said carcass structure;
   wherein said structural element is at least one of said tread band, or said pair of sidewalls.

Preferably, said bead structures are defined by respective carcass turn-up and comprise at least one bead core and at least one bead filler, said bead filler being said structural element.

Preferably, said tire may further comprise:
- a tread underlayer applied in a radially internal position with respect to said tread band; and, optionally
- a pair of sidewall inserts extending radially from each of said bead structures to the corresponding lateral edge of said tread band; and optionally,
- a pair of antiabrasive layers placed in an axially external position with respect to said carcass turn-up;
   wherein said structural element is at least one of said tread underlayer, or said pair of sidewall inserts, or said pair of antiabrasive layers.

In a second aspect, the present invention relates to a crosslinkable elastomeric composition comprising:
(a) 100 phr of at least one elastomeric polymer;
(b) from about 0.1 phr to about 120 phr, preferably from about 20 phr to about 90 phr of at least one reinforcing filler;
(c) from about 1 phr to about 80 phr, preferably from about 2 phr to about 60 phr of glass flakes having an average thickness equal to or lower than 5.0 µm and an average aspect ratio higher than 1.

For the purposes of the present description and of the claims which follow, the term "aspect ratio" means the ratio between the diameter and the thickness of a glass flake and the term "average aspect ratio" means the ratio between the average diameter and the average thickness of a representative sample of glass flakes; the term "diameter" of a glass flake means the diameter of a circle having an area equivalent to the projected area of the glass flake as viewed in a microphotography.

For the purposes of the present description and of the claims which follow the term "phr" means the parts by weight of a given component of the crosslinkable elastomeric composition per 100 parts by weight of the elastomeric polymer(s).

The present invention, in at least one of the abovementioned aspects, may show one or more of the preferred characteristics hereinafter described.

According to one preferred embodiment, said glass flakes (c) may comprise any desired types of glass, preferably inorganic glass. Examples of types of glass of which the glass flakes are composed include industrial glass, quartz glass, borosilicate glass, flat glass, pressed glass, bottle glass, table glass, mirror glass and ceramic glasses, particular preference being given to industrial glass, flat glass, borosilicate glass, or ceramic glasses, or mixtures thereof, especially flat glass, industrial glass, or borosilicate glass.

The glass flakes (c) employed according to the present invention may be untreated or may be surface-treated with functional silanes. Surface-treated glass flakes are particularly preferred.

The use of surface-treated glass flakes may allow to obtain a more homogeneous dispersion of the same in the elastomeric polymer(s).

Specific examples of functional silanes with may be advantageously used to surface-treat the glass flakes include: aminopropyltrialkoxysilanes, such as aminopropyltriethoxysilanes, aminoethylaminopropyltrialkoxysilanes; vinyltrialkoxysilanes, such as vinyltrimethoxysilane, vinyltriacetoxysilane; glycidoxypropyltrialkoxysilanes, such as glycidoxypropyltrimethoxysilane; methacryloxypropyltrialkoxysilanes, such as methacryloxypropyltrimethoxy-silanes; polysulfurized alkoxysilanes, such as di-, tri-, and tetra-sulfides of bis(3-trimethoxysilylpropyl) or bis(3-triethoxysilylpropyl); or mixtures thereof. Bis(3-triethoxysilylpropyl)tetrasulfide, abbreviated TESPT, or bis(triethoxysilyl-propyl)disulfide, abbreviated TESPD, are preferably used.

Alternatively, the glass flakes (c) employed according to the present invention may have been metal vapor-coated, or provided with a surface coating of a purely organic or purely inorganic nature.

According to one preferred embodiment, said glass flakes (c) have an average thickness of from about 0.01 µm to about 5.0 µm, preferably of from about 0.05 µm to about 2.0 µm, most preferably of from about 0.2 µm to about 1.0 µm.

According to a further preferred embodiment, said glass flakes (c) have an average diameter of from about 0.1 µm to about 3000 µm, more preferably of from about 1 µm to about 1500 µm, most preferably of from about 1 µm to about 500 µm.

According to a further preferred embodiment, said glass flakes (c) have an average aspect ratio higher than 2, and more preferably higher than 10.

According to a further preferred embodiment, said average aspect ratio is in the range of from about 10:1 to about 1000:1, more preferably of from about 20:1 to about 900:1, and most preferably of from about 50:1 to about 800:1.

The glass flakes (c) above reported may have very different geometries, such as, for example, planar platelet-shaped, wavy, rolled or twisted, but are preferably planar.

The glass flakes (c) above reported are commercially available, and may be purchased, for example, from Glass Flake Ltd., Leeds, UK. Examples of commercial products which may be advantageously used according to the present invention are: ECR Glass Flake Micronized, Milled or Unmilled GF50nm, GF100nm, GF350nm, GF500nm, GF750nm, GF100, GF200, GF100M, GF200M, GF001 and GF002.

As a consequence of production, the glass flakes may be in the form of a mixture with other glass particles, such as powders or fibers. However, the projected area of said glass flakes account for at least about 50%, preferably at least about 70%, and most preferably at least about 80%, of the total projected area of all glass particles contained in the mixture.

The crosslinkable elastomeric composition according to the present invention preferably comprises glass flakes (c) in amounts of from about 1 phr to about 80 phr, more preferably from about 2 phr to about 60 phr. Crosslinkable elastomeric compositions having glass flake contents of from about 3 phr to about 20 phr may be particularly advantageous.

According to one preferred embodiment, said at least one elastomeric polymer (a) may be selected, for example, from (a₁) diene elastomeric polymers which are commonly used in sulfur-crosslinkable elastomeric compositions, that are particularly suitable for producing tires, that is to say from elastomeric polymers or copolymers with an unsaturated chain having a glass transition temperature (Tg) generally below about 20°C, preferably in the range of from about 0°C to about -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than about 60% by weight.

The conjugated diolefins generally contain from 4 to 12, preferably from 4 to 8, carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.

Monovinylarenes which may optionally be used as comonomers generally contain from 8 to 20, preferably from 8 to 12 carbon atoms, and may be selected, for example, from: stirene; 1-vinylnaphthalene; 2-vinylnaphthalene; various alkyl, cycloalkyl, aryl, alkylaryl or arylalkyl derivatives of stirene such as, for example, a-methylstirene, 3-methylstirene, 4-propylstirene, 4-cyclohexylstirene, 4-dodecylstirene, 2-ethyl-4-benzylstirene, 4-p-tolylstirene, 4-(4-phenylbutyl)stirene, or mixtures thereof. Stirene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer (a₁) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, stirene/1,3-butadiene copolymers, stirene/isoprene/1,3-butadiene copolymers, stirene/1,3-butadiene/acrylonitrile copolymers, or mixtures thereof.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and α-olefins generally containing from 3 to 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular, an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According to one preferred embodiment, said at least one reinforcing filler (b) may be selected from those commonly used for crosslinked manufactured products, in particular for tires, such as, for example, carbon black, silica, alumina, aluminosilicates, calcium carbonate, kaolin, or mixtures thereof. Carbon black, silica, or mixture thereof are particularly preferred.

According to one preferred embodiment, said carbon black reinforcing filler may be selected from those having a surface area of not less than 20 m²/g (determined by CTAB absorption as described in Standard ISO 6810:1995).

According to one preferred embodiment, said silica reinforcing filler may be selected, for example, from: pyrogenic silica, precipitated amorphous silica, wet silica (hydrated silicic acid), dry silica (anhydrous silicic acid), fumed silica, calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to Standard ISO 5794-1:2005, gives the best measure of the reinforcing character of different silicas.

Silica reinforcing fillers which may be advantageously used according to the present invention, preferably have a surface area of from about 32 m²/g to about 400 m²/g, more preferably of from about 100 m²/g to about 250 m²/g, still more preferably of from about 150 m²/g to about 220 m²/g. The pH of said silica reinforcing fillers is, generally, of from about 5.5 to about 7.0, preferably of from about 5.5 to about 6.8.

Examples of silica reinforcing fillers which may be used according to the present invention and are available commercially are the products known by the name of Hi-Sil^{®} 190, Hi-Sil^{®} 210, Hi-Sil^{®} 215, Hi-Sil^{®} 233, Hi-Sil^{®} 243, from PPG Industries (Pittsburgh, Pa.); or the products known by the name of Ultrasil^{®} VN2, Ultrasil^{®} VN3 from Degussa; or the product known under the name of Zeosil^{®} 1165MP from Rhodia.

When a reinforcing filler comprising silica is present, the crosslinkable elastomeric composition may advantageously incorporate a silane coupling agent capable of interacting with the silica and of linking it to the elastomeric polymer(s) during the vulcanization.

Coupling agents that are preferably used are those based on silane which may be identified, for example, by the following structural formula (I):

(R₂)₃Si-CₜH₂ₜX (I)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer of from about 1 to about 6 extremes included; X is a group selected from: nitroso, mercapto, amino, epoxide, vinyl, imide, chloro, -(S)ᵤCₜH₂ₜ-Si-(R₂)₃ or or -S-COR₂ in which u and t are integers of from about 1 to about 6 extremes included and the groups R₂ are defined as reported above.

Among the coupling agents that are particularly preferred are bis(3-triethoxysilylpropyl)tetrasulfide or bis(3-triethoxysilylpropyl)disulfide. Said coupling agents may be used as such or as a suitable mixture with an inert filler (for example carbon black) so as to facilitate their incorporation into the crosslinkable elastomeric composition.

The crosslinkable elastomeric composition above reported may be vulcanized according to known techniques, in particular with sulfur-based vulcanizing systems commonly used for elastomeric polymers. To this end, in the elastomeric composition, after one or more steps of thermomechanical processing, a sulfur-based vulcanizing agent is incorporated together with vulcanization accelerators. In the final processing step, the temperature is generally kept below 120°C and preferably below 100°C, so as to avoid any unwanted pre-crosslinking phenomena.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃ zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂ or mixtures thereof.

Accelerators that are commonly used may be selected from: dithiocarbamates, guanidine, thiourea, thiazoles, sulfenamides, thiurams, amines, xanthates, or mixtures thereof.

Said crosslinkable elastomeric composition may comprise other commonly used additives selected on the basis of the specific application for which the elastomeric composition is intended. For example, the following may be added to said crosslinkable elastomeric composition: antioxidants, anti-ageing agents, plasticizers, adhesives, antiozonants (in particular of the p-phenylenediamine type), waxes, modifying resins, fibres (for example Kevlar^{®} pulp), or mixtures thereof.

For the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges of from about 0 phr to about 70 phr, preferably of from about 1 phr to about 30 phr.

The above reported crosslinkable elastomeric composition may be prepared by mixing together the elastomeric polymer(s), the reinforcing filler (b) and the glass flakes (c) above reported, with the other other additives optionally present, according to techniques known in the art. The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw type.

Alternatively, the glass flakes may be pre-mixed with the elastomeric polymer(s) so as to form a masterbatch which will be subsequently mixed with the remaining components of the crosslinkable elastomeric composition.

The process for producing the tire according to the present invention may be carried out according to techniques and using apparatus that are known in the art, said process including manufacturing a green tire, and subsequently moulding and vulcanizing the green tire.

### Brief description of the drawings

The present invention will now be illustrated in further detail by means of illustrative embodiments, with reference to the attached figures wherein:
- Fig. 1 is a view in cross-section of a portion of a tire made according to a one embodiment of the present invention.
- Fig. 2 is a view in cross-section of a portion of a tire made according to a further embodiment of the present invention.

### Detailed description of the preferred embodiments

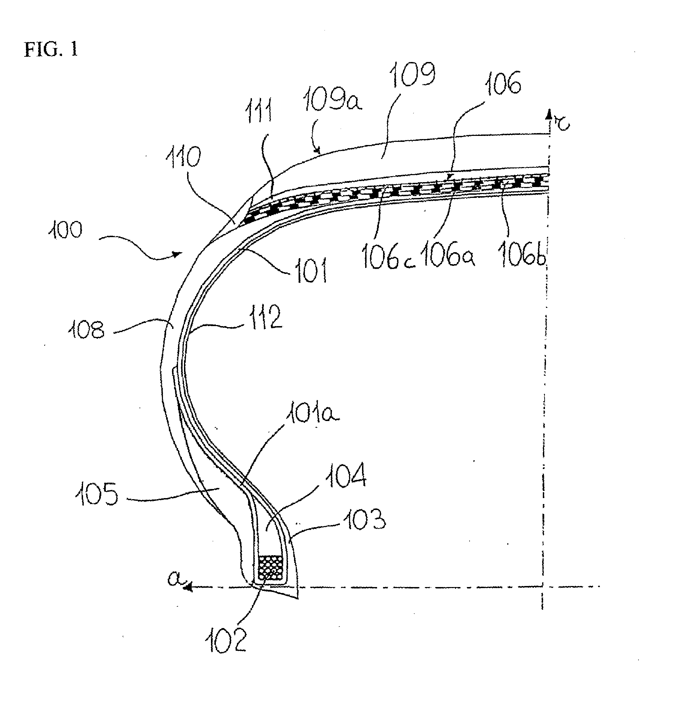

With reference to Fig. 1, "a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures comprising at least one bead core (102) and at least one bead filler (104). The association between the carcass ply (101) and the bead core (102) is achieved here by turning-back the opposite lateral edges of the carcass ply (101) around the bead core (102) so as to form the so-called carcass turn-up (101 a) as shown in Fig. 1.

Alternatively, the conventional bead core (102) may be replaced with at least one annular insert formed from rubberized wires arranged in concentric coils (not represented in Fig. 1) (see, for example, European Patent Applications EP 928,680, or EP 928,702). In this case, the carcass ply (101) is not turned-up around said annular inserts, the coupling being provided by a second carcass ply (not represented in Fig. 1) applied externally over the first.

The carcass ply (101) usually comprises a plurality of reinforcing cords arranged parallel to each other and at least partially coated with a layer of a crosslinked elastomeric composition. These reinforcing cords are usually made of textile fibres, for example rayon, nylon or polyethylene terephthalate, or of steel wires stranded together, coated with a metal alloy (for example copper/zinc, zinc/manganese, zinc/molybdenum/cobalt alloys, and the like).

The carcass ply (101) is usually of radial type, i.e. it incorporates reinforcing cords arranged in a substantially perpendicular direction relative to a circumferential direction.

The core (102) is enclosed in a bead (103), defined along an inner circumferential edge of the tire (100), with which the tire engages on a rim (not represented in Fig. 1) forming part of a vehicle wheel. The space defined by each carcass turn-up (101 a) contains a bead filler (104) which may be made according to the present invention.

An antiabrasive layer (105) which may be made according to the present invention is usually placed in an axially external position relative to the carcass turn-up (101 a).

A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109), which may be made according to the present invention, whose lateral edges are connected to the sidewalls (108), is applied circumferentially in a position radially external to the belt structure (106). Externally, the tread band (109) has a rolling surface (1 09a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A sidewall (108), which may be made according to the present invention, is also applied externally onto the carcass ply (101), this sidewall extending, in an axially external position, from the bead (103) to the end of the belt structure (106).

A tread underlayer (111), which may be made according to the present invention, may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).

A layer made of a crosslinked elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a rubber layer (112) generally known as a liner, which provides the necessary impermeability to the inflation air of the tire, may also be provided in an inner position relative to the carcass ply (101).

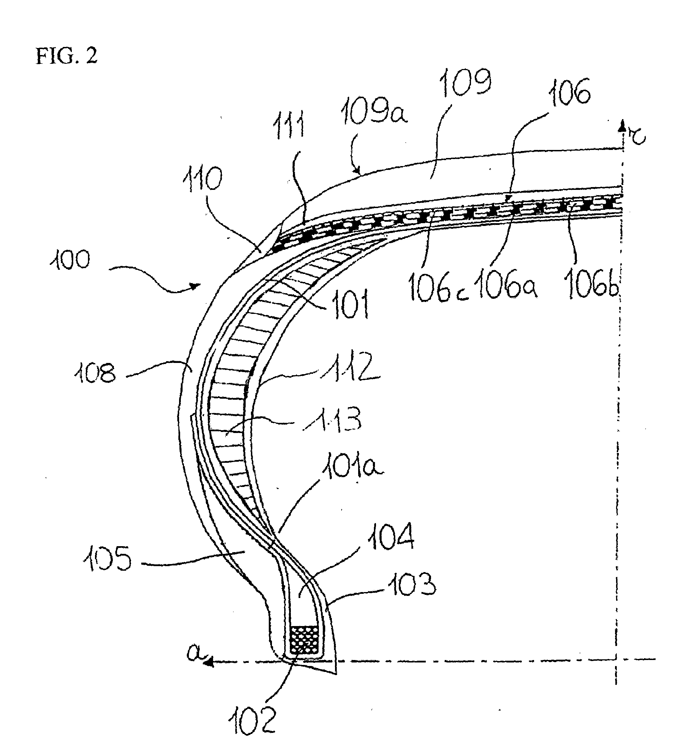

Fig. 2 shows a tire (100) having a structure as described in Fig. 1 (the same reference numbers have the same meanings as disclosed in Fig. 1) further comprising a sidewall insert (113), which may be made according to the present invention. The sidewall insert (113) extends radially from the bead structure (103), said bead structure comprising the bead core (102), the carcass turn-up (101a), and the bead filler (104), to the lateral edge of the tread band (109). The sidewall insert (113) is placed in an axially internal or external position with respect to the carcass ply: for example, as represented in Fig. 2, the sidewall insert (113) is placed between the carcass ply (101) and the liner (112). Alternatively, in the case more than one carcass ply is present, a sidewall insert (113) is placed between two of said carcass plies (not represented in Fig. 2). Alternatively, a sidewall insert (113) is placed between the carcass ply and the sidewall (not represented in Fig. 2). More than one sidewall insert may be present as disclosed, for example, in United States Patent US 5,238,040, or in European Patent Application EP 943,466.

Said sidewall insert (113) is usually used in the case of extended mobility tires such as, for example, run flat tires.

Although the present invention has been illustrated specifically in relation to a tire, other crosslinked elastomeric manufactured articles that may be produced according to the invention may be, for example, conveyor belts, drive belts, or hoses.

The present invention will be further illustrated below by means of a number of preparation examples, which are given for purely indicative purposes and without any limitation of this invention.

The samples of the following examples were evaluated according to the following tests and measurements.

The Mooney viscosity ML(1+4) at 100°C was measured according to Standard ISO 289-1:1994, on the non-crosslinked elastomeric compositions obtained as described below.

The tensile modulus (10% Modulus, 50% Modulus, 100% Modulus and 300% Modulus), the tensile strength, as well as the elongation at break, were measured according to Standard ISO 37:2005, both in the calendering direction and in the direction perpendicular thereto, on samples of the elastomeric compositions described below vulcanized at 170°C, for 10 min. The tensile modulus 100% ratio is the ratio of the tensile modulus 100% measured along the calendering direction and the tensile modulus 100% measured in the direction perpendicular thereto.

The hardness in IRHD degrees (at 10°C, at 23°C and at 100°C) according to Standard ISO 48:1994 and the Shore hardness according to ISO 7619-1:2004, were measured on samples of the elastomeric compositions vulcanized at 170°C, for 10 min.

The dynamic mechanical properties were measured using an Instron dynamic device in the traction-compression mode according to the following methods. A test piece of the crosslinked elastomeric composition (vulcanized at 170°C, for 10 min) having a cylindrical form (length = 25 mm; diameter = 12 mm), compression-preloaded up to a 25% longitudinal deformation with respect to the initial length, and kept at the prefixed temperature (10°C, 23°C, and 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E'). The thermoplastic behavior is evaluated as the difference ΔE' of the dynamic elastic modulus measured at two reference temperatures selected on the basis of the kind of elastomeric composition and/or its application in the tire.

### EXAMPLE 1

### Preparation of elastomeric compositions 1 to 6 (tread band)

The elastomeric compositions 1 to 6 given in Table 1 were prepared as follows (the amounts of the various components are given in phr).

All the components, except sulfur and accelerators (TBBS), were mixed together in an internal mixer (model Pomini PL 1.6) for about 5 min (1^{st} Step). As soon as the temperature reached 145±5°C, the elastomeric composition was discharged. The sulfur and accelerators (TBBS), were then added and mixing was carried out in an open roll mixer (2^{nd} Step).

**TABLE 1**

| SAMPLE | 1 (*) | 2 (*) | 3 (*) | 4 (^) | 5(^) | 6 (*) |
|---|---|---|---|---|---|---|
| **1^{st} STEP** | | | | | | |
| NR | 50.0 | 50.0 | 50.0 | 50.0 | 50.0 | 50.0 |
| BR | 20.0 | 20.0 | 20.0 | 20.0 | 20.0 | 20.0 |
| SBR | 30.0 | 30.0 | 30.0 | 30.0 | 30.0 | 30.0 |
| TESPT | 0.6 | 0.6 | 0.6 | 0.6 | 0.6 | 0.6 |
| N234 | 55.0 | 63.0 | 55.0 | 55.0 | 55.0 | 55.0 |
| Silica | - | - | 8.0 | - | - | - |
| GF002 | - | - | - | - | 8.0 | - |
| GF350nm | - | - | - | 8.0 | - | - |
| RICS | - | - | - | - | - | 8.0 |
| Stearic Acid | 2.0 | 2.0 | 2.0 | 2.0 | 2.0 | 2.0 |
| Zinc Oxide | 3.0 | 3.0 | 3.0 | 3.0 | 3.0 | 3.0 |
| Antioxidant | 4.0 | 4.0 | 4.0 | 4.0 | 4.0 | 4.0 |
| Aromatic oil | 5.0 | 5.0 | 5.0 | 5.0 | 5.0 | 5.0 |

| **2^{nd} STEP** | | | | | | |
|---|---|---|---|---|---|---|
| Sulfur | 1.2 | 1.2 | 1.2 | 1.2 | 1.2 | 1.2 |
| TBBS | 1.7 | 1.7 | 1.7 | 1.7 | 1.7 | 1.7 |

| | | | | | | |
|---|---|---|---|---|---|---|
| (*): comparison (^): invention | | | | | | |

- SBR:: emulsion-prepared styrene/1,3-butadiene copolymer having a styrene content of 23.5% by weight (Europrene^{®} 1500 - Polimeri Europa);
- BR:: polybutadiene (Europrene Neocis^{®} BR40 - Polimeri Europa);
- NR:: natural rubber (SMR GP);
- Silica:: Zeosil^{®} 1165 MP (Rhodia);
- TESPT:: bis(3-triethoxysilylpropyl)tetrasulfide (Degussa-Hiils);
- N234:: Carbon black
- GF002:: Micronized glass flakes with 2µm thickness and about 30:1 aspect ratio treated with about 8% by weight of TESPD (Glass Flake Ltd);
- GF350nm:: Milled glass flakes with 350 nm thickness and about 850:1 aspect ratio treated with about 8% by weight of TESPD (Glass Flake Ltd);
- RICS:: Glass fibers with diameter 10 µm (Nippon Glass Fibers);
- Antioxidant:: phenyl-p-phenylenediamine (6-PPD - Akzo Nobel);
- TBBS:: N-tert-butyl-2-benzothiazylsulfenamide (Vulkacit^{®} NZ/EGC - Lanxess).

All the samples were evaluated as described above and the results were summarized in the following Table 2.

**TABLE 2**

| Results | 1 (*) | 2 (*) | 3 (*) | 4 (^) | 5 (^) | 6 (*) |
|---|---|---|---|---|---|---|
| GREEN PROPERTIES | | | | | | |
| Mooney ML (1+4) 100°C | 100 | 117 | 118 | 98 | 100 | 97 |

| STATIC MECHANICAL PROPERTIES | | | | | | |
|---|---|---|---|---|---|---|
| Density [g/cm³] 23°C | 100 | 102 | 102 | 102 | 102 | 102 |
| IRHD Hardness 23°C | 100 | 105 | 103 | 103 | 102 | 105 |
| IRHD Hardness 100°C | 100 | 106 | 106 | 106 | 102 | 108 |

| DIRECTION PARALLEL TO CALENDERING | | | | | | |
|---|---|---|---|---|---|---|
| Tensile modulus 10% [MPa] | 100 | 116 | 108 | 136 | 120 | 193 |
| Tensile modulus 50% [MPa] | 100 | 118 | 112 | 151 | 126 | 209 |
| Tensile modulus 100% [MPa] | 100 | 126 | 120 | 163 | 136 | 169 |
| Tensile modulus 300% [MPa] | 100 | 129 | 119 | 112 | 111 | 117 |
| Tensile strength [MPa] | 100 | 94 | 94 | 95 | 99 | 98 |
| Elongation at break [%] | 100 | 83 | 88 | 94 | 96 | 92 |
| Energy [J/cm³] | 100 | 80 | 86 | 99 | 101 | 97 |

| DIRECTION ORTHOGONAL TO CALENDERING | | | | | | |
|---|---|---|---|---|---|---|
| Tensile modulus 10% [MPa] | 100 | 115 | 103 | 127 | 110 | 110 |
| Tensile modulus 50% [MPa] | 100 | 112 | 105 | 142 | 112 | 108 |
| Tensile modulus 100% [MPa] | 100 | 112 | 105 | 155 | 117 | 107 |
| Tensile modulus 300% [MPa] | 100 | 115 | 108 | 109 | 98 | 94 |
| Tensile strength [MPa] | 100 | 94 | 94 | 92 | 96 | 85 |
| Elongation at break [%] | 100 | 89 | 90 | 90 | 99 | 92 |
| Energy [J/cm³] | 100 | 85 | 83 | 89 | 97 | 78 |
| | | | | | | |
| Tensile modulus 100% ratio | 100 | 113 | 114 | 105 | 116 | 158 |

| DYNAMIC MECHANICAL PROPERTIES | | | | | | |
|---|---|---|---|---|---|---|
| E' (23°C) | 100 | 114 | 108 | 123 | 107 | 125 |
| E' (70°C) | 100 | 114 | 107 | 128 | 109 | 123 |
| ΔE' (23°C - 70°C) | 100 | 117 | 112 | 96 | 95 | 134 |
| Tan delta (23°C) | 100 | 105 | 101 | 92 | 97 | 95 |
| Tan delta (70°C) | 100 | 104 | 98 | 93 | 96 | 99 |

The samples 4 and 5 according to the present invention showed a viscosity equal to or lower than that of sample 1 (set at 100) and even more lower than that of sample 2 and 3 comprising an increased amount of fillers (carbon black or silica). A reduced viscosity in the non-crosslinked state means a better processability. Hardness is increased in all cases and for both temperatures considered.

Sample 5 and even more sample 4 showed very good values of dynamical properties. The higher reinforcement was obtained for samples 5 and 6, but this latter is much more thermoplastic (higher value of ΔE' between 23°C and 70°C).

Another important advantage of glass flakes comes out from the analysis of tensile properties measured along two perpendicular directions. Table 2 shows the values of tensile modulus measured along two directions orthogonal each other in order to evaluate the reinforcement in two dimensions. The data of Table 2, as evidenced by the value of tensile modulus 100% ratio, clearly showed that glass flakes did provide an isotropic reinforcement, even better than conventional fillers, while glass fibers did not.

### EXAMPLE 2

### Preparation of elastomeric compositions 7 to 11 (tread band)

The elastomeric compositions 7 to 11 given in Table 3 were prepared as follows (the amounts of the various components are given in phr).

All the components, except sulfur and accelerators (DPG80 and CBS), were mixed together in an internal mixer (model Pomini PL 1.6) for about 5 min (1^{st} Step). As soon as the temperature reached 145±5°C, the elastomeric composition was discharged. The sulfur and accelerators (DPG and CBS), were then added and mixing was carried out in an open roll mixer (2^{nd} Step).

**TABLE 3**

| SAMPLE | 7 (*) | 8 (^) | 9 (^) | 10 (^) | 11 (^) |
|---|---|---|---|---|---|
| **1^{st} STEP** | | | | | |
| S-SBR | 90.0 | 90.0 | 90.0 | 90.0 | 90.0 |
| BR | 35.0 | 35.0 | 35.0 | 35.0 | 35.0 |
| Silica | 70.0 | 60.0 | 65.0 | 60.0 | 65.0 |
| TESPT | 5.6 | 4.8 | 5.2 | 4.8 | 5.2 |
| GF001 | - | 10.8 | 5.4 | - | - |
| GF350nm | - | - | - | 10.8 | 5.4 |
| Stearic Acid | 2.0 | 2.0 | 2.0 | 2.0 | 2.0 |
| Zinc Oxide | 2.5 | 2.5 | 2.5 | 2.5 | 2.5 |
| Aromatic oil | 25.0 | 25.0 | 25.0 | 25.0 | 25.0 |
| Antioxidant | 3.0 | 3.0 | 3.0 | 3.0 | 3.0 |

| **2^{nd} STEP** | | | | | |
|---|---|---|---|---|---|
| Sulfur | 1.2 | 1.2 | 1.2 | 1.2 | 1.2 |
| DPG80 | 2.0 | 2.0 | 2.0 | 2.0 | 2.0 |
| CBS | 2.0 | 2.0 | 2.0 | 2.0 | 2.0 |

| | | | | | |
|---|---|---|---|---|---|
| (*): comparison. (^): invention | | | | | |

- S-SBR:: solution-prepared styrene/1,3-butadiene copolymer having a styrene content of 25% by weight and a vinyl content of 50% by weight, with respect to the total copolymer weight; and containing 37.5 phr of aromatic oil (Buna^{®} VSL 5025-1 - Lanxess);
- BR:: polybutadiene (Europrene Neocis^{®} BR40 - Polimeri Europa);
- Silica:: Zeosil^{®} 1165 MP (Rhodia);
- TESPT:: bis(3-triethoxysilylpropyl)tetrasulfide (Degussa-Hüls);
- GF001:: Micronized glass flakes with thickness of about 1 µm and aspect ratio of about 45:1 treated with about 8% by weight of TESPD (Glass Flake Ltd);
- GF350nm :: Milled glass flakes with thickness of about 350 nm and aspect ratio of about 850:1 treated with about 8% by weight of TESPD;
- Antioxidant:: phenyl-p-phenylenediamine (6-PPD - Akzo Nobel);
- DPG80:: diphenyl guanidine (Rhenogran^{®} DPG80 - Rhein Chemie);
- CBS:: N-cyclohexyl-2-benzothiazyl-sulfenamide (Vulkacit^{®} CZ/C - Lanxess).

All the samples were evaluated as described above and the results were summarized in the following Table 4.

**TABLE 4**

| RESULTS | 7 (*) | 8 (^) | 9 (^) | 10 (^) | 11 (^) |
|---|---|---|---|---|---|
| GREEN PROPERTIES | | | | | |
| Mooney ML (1+4) 100°C | 100 | 82 | 92 | 83 | 89 |

| STATIC MECHANICAL PROPERTIES | | | | | |
|---|---|---|---|---|---|
| 50% Modulus (MPa) | 100 | 107 | 109 | 130 | 114 |
| 100% Modulus (MPa) | 100 | 116 | 114 | 148 | 125 |
| 300% Modulus (MPa) | 100 | 105 | 110 | 117 | 112 |
| Tensile strength (MPa) | 100 | 88 | 98 | 95 | 96 |
| Elongation at break (%) | 100 | 87 | 92 | 87 | 89 |
| IRHD hardness (10°C) | 100 | 96 | 99 | 97 | 98 |
| IRHD hardness (23°C) | 100 | 96 | 98 | 97 | 98 |
| IRHD hardness (100°C) | 100 | 99 | 102 | 102 | 101 |

| DYNAMIC MECHANICAL PROPERTIES | | | | | |
|---|---|---|---|---|---|
| E' (10°C) | 100 | 93 | 98 | 102 | 100 |
| E' (23°C) | 100 | 93 | 100 | 103 | 100 |
| E' (70°C) | 100 | 97 | 103 | 109 | 104 |
| ΔE' (10°C - 70°C) | 100 | 88 | 94 | 96 | 96 |
| Tan delta (10°C) | 100 | 94 | 100 | 91 | 97 |
| Tan delta (23°C) | 100 | 89 | 94 | 88 | 93 |
| Tan delta (70°C) | 100 | 83 | 91 | 82 | 90 |

| | | | | | |
|---|---|---|---|---|---|
| (*): comparison (^) invention | | | | | |

The elastomeric compositions 8 to 11 according to the present invention, when compared with the comparison elastomeric composition 7 (set at 100), have shown a reduced viscosity in their non-crosslinked state, so showing a better processability. Additionally, the elastomeric compositions 8 to 11 have shown equal or improved static and dynamic mechanical properties. More in particular, elastomeric compositions 8 to 11 have shown improved modulus.

Moreover, the elastomeric compositions 8 to 11 have shown a reduced thermoplasticity indicated by reduced ΔE' value (lower value of ΔE' between 10°C and 70°C).

### EXAMPLE 3

### Preparation of elastomeric compositions 12 and 13 (side-wall insert)

The elastomeric compositions 12 and 13 given in Table 5 were prepared as follows (the amounts of the various components are given in phr).

All the components, except sulfur and accelerators (TBBS), were mixed together in an internal mixer (model Pomini PL 1.6) for about 5 min (1^{st} Step). As soon as the temperature reached 145±5°C, the elastomeric composition was discharged. The sulfur and accelerators (TBBS), were then added and mixing was carried out in an open roll mixer (2^{nd} Step).

**TABLE 5**

| SAMPLES | 12 (*) | 13 (^) |
|---|---|---|
| **1^{st} STEP** | | |
| BR | 50 | 50 |
| IR | 50 | 50 |
| N660 | 35 | 35 |
| Silica | 20 | 10 |
| TESPT | 1.2 | 0.4 |
| GF001 | - | 10.8 |
| Zinc Oxide | 4 | 4 |
| Antioxidant | 3.5 | 3.5 |

| **2^{nd} STEP** | | |
|---|---|---|
| Sulfur | 1.3 | 1.3 |
| TBBS | 2 | 2 |

| | | |
|---|---|---|
| (*): comparison (^): invention | | |

- BR:: polybutadiene (Europrene Neocis^{®} BR40 - Polimeri Europa);
- IR:: cis-1,4-polyisoprene (SKI -Nizhnekamskneftechim Export);
- N660:: carbon black;
- Silica:: Zeosil^{®} 1115 MP (Rhodia);
- TESPT:: bis(3-triethoxysilylpropyl)tetrasulfide (Degussa-Hüls);
- GF001:: Micronized glass flakes with thickness of about 1 µm and aspect ratio of about 45:1 treated with about 8% by weight of TESPD (Glass Flake Ltd);
- Antioxidant:: phenyl-p-phenylenediamine (6-PPD - Akzo Nobel);
- TBBS:: N-tert-butyl-2-benzothiazylsulfenamide (Vulkacit^{®} NZ/EGC - Lanxess).

All the samples were evaluated as described previously and the results were summarized in the following Table 6.

**TABLE 6**

| RESULTS | 12 (*) | 13 (^) |
|---|---|---|
| GREEN PROPERTIES | | |
| Money ML (1+4) 100°C | 100 | 97 |

| STATIC MECHANICAL PROPERTIES | | |
|---|---|---|
| 50% Modulus (MPa) | 100 | 142 |
| 100% Modulus (MPa) | 100 | 147 |
| Tensile strength (MPa) | 100 | 116 |
| Elongation at break (%) | 100 | 96 |
| IRHD hardness (23°C) | 100 | 103 |
| IRHD hardness (100°C) | 100 | 105 |

| DYNAMIC MECHANICAL PROPERTIES | | |
|---|---|---|
| E' (23°) | 100 | 114 |
| E' (70°C) | 100 | 114 |
| ΔE' (23°C - 70°C) | 100 | 81 |
| Tan delta (23°C) | 100 | 98 |
| Tan delta (70°C) | 100 | 91 |

| | | |
|---|---|---|
| (*): comparison (^)_{:} invention | | |

The elastomeric composition 13, according to the present invention, when compared with the comparison elastomeric composition 12 (set at 100), has shown a reduced viscosity in their non-crosslinked state, so showing a better processability. Additionally, the elastomeric compositions 13 has shown equal or improved static and dynamic mechanical properties. More in particular, elastomeric compositions 13 has shown improved modulus, improved dynamic elastic modulus and reduced thermoplasticity indicated by reduced ΔE' value (lower value of ΔE' between 23°C and 70°C)..

### EXAMPLE 4

### Preparation of elastomeric compositions 14 to 16 (bead filler)

The elastomeric compositions 14 to 16 given in Table 7 were prepared as follows (the amounts of the various components are given in phr).

All the components, except sulfur and accelerators and methylene donor (TBBS + HMMM), were mixed together in an internal mixer (model Pomini PL 1.6) for about 5 min (1^{st} Step). As soon as the temperature reached 145±5°C, the elastomeric composition was discharged. The sulfur, the accelerator and the methylene donor were then added and mixing was carried out in an open roll mixer (2^{nd} Step).

**TABLE 7**

| EXAMPLE | 14 (*) | 15 (^) | 16 (A) |
|---|---|---|---|
| **1^{st} STEP** | | | |
| IR | 100 | 100 | 100 |
| N326 | 75 | 75 | 75 |
| GF001 | - | 10.8 | - |
| GF350nm | - | - | 10.8 |
| Zinc Oxide | 10 | 10 | 10 |
| Antioxidant | 2 | 2 | 2 |
| Stearic Acid | 2 | 2 | 2 |
| Cobalt naphthenate | 0.6 | 0.6 | 0.6 |
| Resorcinol | 1.8 | 1.8 | 1.8 |

| **2^{nd} STEP** | | | |
|---|---|---|---|
| Sulfur | 7 | 7 | 7 |
| TBBS | 1 | 1 | 1 |
| HMMM | 1.8 | 1.8 | 1.8 |

| | | | |
|---|---|---|---|
| (*): comparison (^)_{:} invention | | | |

- IR:: cis-1,4-polyisoprene (SKI -Nizhnekamskneftechim Export);
- N326:: carbon black;
- GF001:: Micronized glass flakes with thickness of about 1 µm and aspect ratio of about 45:1 treated with about 8% by weight of TESPD (Glass Flake Ltd);
- GF350nm :: Milled glass flakes with thickness of about 350 nm and aspect ratio of about 850:1 treated with about 8% by weight of TESPD;
- Antioxidant:: phenyl-p-phenylenediamine (6-PPD - Akzo Nobel);
- TBBS:: N-tert-butyl-2-benzothiazylsulfenamide (Vulkacit^{®} NZIEGC - Lanxess).
- HMMM:: hexamethoxymethylmelamine.

**TABLE 8**

| EXAMPLE | 14 (*) | 15 (^) | 16 (^) |
|---|---|---|---|
| GREEN PROPERTIES | | | |
| Money ML (1+4) 100°C | 100 | 89 | 91 |

| STATIC MECHANICAL PROPERTIES | | | |
|---|---|---|---|
| 10% Modulus (MPa) | 100 | 108 | 122 |
| 50% Modulus (MPa) | 100 | 112 | 124 |
| 100% Modulus (MPa) | 100 | 108 | 113 |
| Tensile strength (MPa) | 100 | 108 | 102 |
| Elongation at break (%) | 100 | 100 | 100 |
| Shore hardness D (23°C) | 100 | 103 | 104 |

| DYNAMIC MECHANICAL PROPERTIES | | | |
|---|---|---|---|
| E' (70°C) | 100 | 105 | 107 |
| E' (100°C) | 100 | 107 | 109 |
| ΔE' (70°C - 100°C) | 100 | 99 | 99 |
| Tan delta (70°C) | 100 | 100 | 100 |
| Tan delta (100°C) | 100 | 97 | 98 |

| | | | |
|---|---|---|---|
| (*): comparison (^): invention | | | |

The elastomeric compositions 15 and 16 according to the present invention, when compared with the comparison elastomeric composition 14 (set at 100), have shown a reduced viscosity in their non-crosslinked state, so showing a better processability. Additionally, the elastomeric compositions 15 and 16 have shown equal or improved static and dynamic mechanical properties. More in particular, elastomeric compositions 15 and 16 have shown improved modulus and improved dynamic elastic modulus.

## Claims

1. A tire comprising at least one structural element including a crosslinked elastomeric material obtained by crosslinking a crosslinkable elastomeric composition comprising:
(a) 100 phr of at least one elastomeric polymer,
(b) from about 0.1 phr to about 120 phr of at least one reinforcing filler;
(c) from about 1 phr to about 80 phr of glass flakes having an average thickness equal to or lower than 5.0 µm and an average aspect ratio higher than 1.

2. Tire according to claim 1, said tire comprising:
- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is at least one of said tread band, or said pair of sidewalls.

3. Tire according to claim 2, wherein said bead structures are defined by respective carcass turn-up and comprise at least one bead core and at least one bead filler, said bead filler being said structural element.

4. Tire according to claim 2 or 3, said tire further comprising:
- a tread underlayer applied in a radially internal position with respect to said tread band;
wherein said structural element is said tread underlayer.

5. Tire according to any one of claims 2 to 4, said tire further comprising:
- a pair of sidewall inserts extending radially from each of said bead structures to the corresponding lateral edge of said tread band;
wherein said structural element is said pair of sidewall inserts.

6. Tire according to any one of claims 2 to 5, said tire further comprising:
- a pair of antiabrasive layers placed in an axially external position with respect to said carcass tum-up;
wherein said structural element is said pair of antiabrasive layers.

7. Tire according to any one of claims 1 to 6, wherein said glass flakes have an average thickness of from about 0.01 µm to about 5.0 µm.

8. Tire according to claim 7, wherein said glass flakes have an average thickness of from about 0.05 µm to about 2.0 µm.

9. Tire according to claim 8, wherein said glass flakes have an average thickness of from about 0.2 µm to about 1.0 µm.

10. Tire according to any one of the preceding claims, wherein said glass flakes have an average diameter of from about 0.1 µm to about 3000 µm.

11. Tire according to claim 10, wherein said glass flakes have an average diameter of from about 1 µm to about 1500 µm.

12. Tire according to claim 11, wherein said glass flakes have an average diameter of from about 1 µm to about 500 µm.

13. Tire according to any one of the preceding claims, wherein said glass flakes have an average aspect ratio higher than 2.

14. Tire according to claim 13, wherein said glass flakes have an average aspect ratio higher than 10.

15. Tire according to any one of the preceding claims, wherein said glass flakes have an average aspect ratio in the range of from about 10:1 to about 1000:1.

16. Tire according to claim 15, wherein said glass flakes have an average aspect ratio in the range of from about 20:1 to about 900:1.

17. Tire according to claim 16, wherein said glass flakes have an average aspect ratio in the range of from about 50:1 to about 800:1.

18. Tire according to any one of preceding claims, wherein said glass flakes are surface-treated with functional silanes.

19. Tire according to claim 18, wherein said functional silane is selected from the group comprising aminopropyltrialkoxysilanes, vinyltrialkoxysilanes, glycidoxypropyltrialkoxysilanes, methacryloxypropyltrialkoxysilanes, polysulfurized alkoxysilanes, or mixtures thereof.

20. Tire according to any one of preceding claims, wherein the projected area of said glass flakes accounts for at least 50% of the total projected area of all glass particles.

21. Tire according to any one of preceding claims, wherein the amount of said glass flakes ranges from about 2 phr to about 60 phr.

22. Tire according to claim 21, wherein the amount of said glass flakes ranges from about 3 phr to about 20 phr.

## Patentansprüche

1. Reifen, der mindestens ein Strukturelement umfasst, das ein vernetztes Elastomermaterial einschließt, das durch Vernetzen einer vernetzbaren Elastomerzusammensetzung erhältlich ist, die folgendes umfasst:
(a) 100 phr mindestens eines Elastomerpolymers;
(b) von ungefähr 0,1 phr bis ungefähr 120 phr mindestens ein verstärkter Füller;
(c) von ungefähr 1 phr bis ungefähr 80 phr Glasflocken, die eine mittlere Dicke von 5,0 µm oder geringer und ein mittleres Seitenverhältnis von mehr als 1 aufweisen.

2. Reifen gemäß Anspruch 1, wobei der Reifen folgendes umfasst:
- eine Karkassenstruktur einer im wesentlichen toroidalen Gestalt, die gegenüberliegende laterale Seiten mit dazugehörigen rechtsseitigen und linksseitigen Reifenwulststrukturen aufweist;
- eine Gürtelstruktur, die in radial externer Lage hinsichtlich der Karkassenstruktur angeordnet ist;
- ein Profilband, das in radial externer Lage hinsichtlich der Gürtelstruktur angeordnet ist;
- ein Paar Seitenwände, die bezogen auf die Karkassenstruktur lateral an gegenüberliegenden Seiten angeordnet sind;
worin das Strukturelement mindestens das Profilband oder das Paar Seitenwände ist.

3. Reifen gemäß Anspruch 2, worin die Reifenwulststrukturen durch entsprechende Karkassenumschläge definiert sind und mindestens einen Wulstkern und mindestens einen Wulstfüller umfassen und der Wulstfüller das Strukturelement ist.

4. Reifen gemäß Anspruch 2 oder 3, worin der Reifen weiterhin folgendes umfasst:
- eine Profilunterschicht, die in radial interner Lage hinsichtlich des Profilbandes angeordnet ist;
worin das Strukturelement die Profilunterschicht ist.

5. Reifen gemäß mindestens einem der Ansprüche 2 bis 4, worin der Reifen weiterhin folgendes umfasst:
- ein Paar Seitenwandeinlagen, die sich radial von jeder der Reifenwulststrukturen zu den entsprechenden lateralen Seiten des Profilbandes erstrecken;
worin das Strukturelement das Paar Seitenwandeinlagen ist.

6. Reifen gemäß mindestens einem der Ansprüche 2 bis 5, worin der Reifen weiterhin folgendes umfasst:
- ein Paar Antischleifschichten, die in axial externer Lage hinsichtlich der Karkassenumschläge platziert sind;
worin das Strukturelement das Paar Antischleifschichten ist.

7. Reifen gemäß mindestens einem der Ansprüche 1 bis 6, worin die Glasflocken eine mittlere Dicke von ungefähr 0,01 µm bis ungefähr 5,0 µm aufweisen.

8. Reifen gemäß Anspruch 7, worin die Glasflocken eine mittlere Dicke von ungefähr 0,05 µm bis ungefähr 2,0 µm aufweisen.

9. Reifen gemäß Anspruch 8, worin die Glasflocken eine mittlere Dicke von ungefähr 0,2 µm bis ungefähr 1,0 µm aufweisen.

10. Reifen gemäß mindestens einem der vorangehenden Ansprüche, worin die Glasflocken einen mittleren Durchmesser von ungefähr 0,1 µm bis ungefähr 3.000 µm aufweisen.

11. Reifen gemäß Anspruch 10, worin die Glasflocken einen mittleren Durchmesser von ungefähr 1 µm bis ungefähr 1.500 µm aufweisen.

12. Reifen gemäß Anspruch 11, worin die Glasflocken einen mittleren Durchmesser von ungefähr 1 µm bis ungefähr 500 µm aufweisen.

13. Reifen gemäß mindestens einem der vorangehenden Ansprüche, worin die Glasflocken ein mittleres Seitenverhältnis von mehr als 2 aufweisen.

14. Reifen gemäß Anspruch 13, worin die Glasflocken ein mittleres Seitenverhältnis von mehr als 10 aufweisen.

15. Reifen gemäß mindestens einem der vorhergehenden Ansprüche, worin die Glasflocken ein mittleres Seitenverhältnis im Bereich von ungefähr 10:1 bis ungefähr 1.000:1 aufweisen.

16. Reifen gemäß Anspruch 15, worin die Glasflocken ein mittleres Seitenverhältnis im Bereich von ungefähr 20:1 bis ungefähr 900:1 aufweisen.

17. Reifen gemäß Anspruch 16, worin die Glasflocken ein mittleres Seitenverhältnis im Bereich von ungefähr 50:1 bis ungefähr 800:1 aufweisen.

18. Reifen gemäß mindestens einem der vorhergehenden Ansprüche, worin die Glasflocken mit funktionalen Silanen oberflächenbehandelt sind.

19. Reifen gemäß Anspruch 18, worin die funktionalen Silane aus Aminopropyltrialkoxysilanen, Vinyltrialkoxysilanen, Glycidoxypropyltrialkoxysilanen, Methacryloxypropyltrialkoxysilanen, Poly-verschwefelten Alkoxysilanen oder Mischungen daraus ausgewählt sind.

20. Reifen gemäß mindestens einem der vorhergehenden Ansprüche, worin der projizierte Bereich der Glasflocken mindestens 50 % des Gesamtprojektionsbereichs aller Glaspartikel ausmacht.

21. Reifen gemäß mindestens einem der vorhergehenden Ansprüche, worin die Menge der Glasflocken im Beriech von ungefähr 2 phr bis ungefähr 60 phr ist.

22. Reifen gemäß Anspruch 21, worin die Menge der Glasflocken im Bereich von ungefähr 3 phr bis ungefähr 20 phr ist.

## Revendications

1. Un pneu comprenant au moins un élément structurel, incluant un matériau élastomère réticulé obtenu par réticulation d'une composition d'élastomère réticulable comprenant:
(a) 100 pcc d'au moins un polymère élastomère ;
(b) entre environ 0,1 pcc et environ 120 pcc d'au moins une charge de renfort ;
(c) entre environ 1 pcc et environ 80 pcc d'éclats de verre ayant une épaisseur moyenne égale ou inférieure à 5,0 µm et un ratio d'aspect moyen supérieur à 1.

2. Pneu selon la revendication 1, ledit pneu comprenant:
- une structure de carcasse de forme sensiblement toroïdale, ayant des bords latéraux opposés associés respectivement à des structures de talon à droite et à gauche ;
- une structure de ceinture appliquée dans une position radialement externe par rapport à ladite carcasse structure ;
- une bande de roulement appliquée dans une position radialement externe par rapport à ladite structure de ceinture ;
- une paire de flancs appliqués latéralement sur des côtés opposés par rapport à ladite structure de carcasse ;
dans lequel ledit élément structurel est au moins un parmi ladite bande de roulement, ou ladite paire de parois latérales.

3. Pneu selon la revendication 2, dans lequel lesdites structures de talon sont définies par des retournements de carcasse respectifs et comprennent au moins une tringle de talon et à au moins un bourrage de talon, ladite bourrage de talon étant ledit élément structurel.

4. Pneu selon la revendication 2 ou 3, ledit pneu comprenant en outre:
- une sous-couche de roulement appliquée dans une position radialement interne par rapport à ladite bande de roulement ;
dans lequel ledit élément structurel est ladite sous-couche de roulement.

5. Pneu selon l'une quelconque des revendications 2 à 4, ledit pneu comprenant en outre:
- une paire d'inserts de flanc s'étendant radialement depuis chacune desdites structures de talon jusqu'au bord latéral correspondant de ladite bande de roulement ;
dans lequel ledit élément de structure est ladite paire d'inserts de flanc.

6. Pneu selon l'une quelconque des revendications 2 à 5, ledit pneu comprenant en outre :
- une paire de couches anti-abrasives placées dans une position axialement externe par rapport audit retournement de carcasse ;
dans lequel ledit élément de structure est ladite paire de couches antiabrasive.

7. Pneu selon l'une quelconque des revendications 1 à 6, dans lequel lesdits éclats de verre ont une épaisseur moyenne d'environ 0,01 µm à environ 5,0 µm.

8. Pneu selon la revendication 7, dans lequel lesdits éclats de verre ont une épaisseur moyenne d'environ 0,05 µm à environ 2,0 µm.

9. Pneu selon la revendication 8, dans lequel lesdits éclats de verre ont une épaisseur moyenne d'environ 0,2 µm à environ 1,0 µm.

10. Pneu selon l'une quelconque des revendications précédentes, dans lequel lesdits éclats de verre ont un diamètre moyen d'environ 0,1 µm à environ 3000 µm.

11. Pneu selon la revendication 10, dans lequel lesdits éclats de verre ont un diamètre moyen d'environ 1 µm à environ 1500 µm.

12. Pneu selon la revendication 11, dans lequel lesdits éclats de verre ont un diamètre moyen d'environ 1 µm jusqu'à environ 500 µm.

13. Pneu selon l'une quelconque des revendications précédentes, dans lequel lesdits éclats de verre ont un ratio d'aspect moyen supérieur à 2.

14. Pneu selon la revendication 13, dans lequel lesdits éclats de verre ont un ratio d'aspect moyen supérieur à 10.

15. Pneu selon l'une quelconque des revendications précédentes, dans lequel lesdits éclats de verre ont un ratio d'aspect moyen dans l'intervalle d'environ 10:1à environ 1000:1.

16. Pneu selon la revendication 15, dans lequel lesdits éclats de verre ont un ratio d'aspect moyen dans l'intervalle d'environ 20:1 à environ 900: 1.

17. Pneu selon la revendication 16, dans lequel lesdits éclats de verre ont un ratio d'aspect moyen dans l'intervalle d'environ 50:1 à environ 800: 1.

18. Pneu selon l'une quelconque des revendications précédentes, dans lequel lesdits éclats de verre sont traités en surface par des silanes fonctionnels.

19. Pneu selon la revendication 18, dans lequel ledit silane fonctionnel est choisi dans le groupe comprenant aminopropyltrialkoxysilanes, vinyltrialcoxysilanes, glycidoxypropyltrialkoxysilanes, methacryloxypropyltrialkoxysilanes, alkoxysilanes polysulfurés, ou leurs mélanges.

20. Pneu selon l'une quelconque des revendications précédentes, dans lequel la surface projetée desdits éclats de verre compte pour au moins 50% de la surface totale projetée de toutes les particules de verre.

21. Pneu selon l'une quelconque des revendications précédentes, dans lequel la quantité desdits éclats de verre varie entre environ 2 pcc et environ 60 pcc.

22. Pneu selon la revendication 21, dans lequel la quantité desdits éclats de verre varie entre environ 3 pcc et environ 20 pcc.
